# FASCICULE DE BREVET EUROPEEN

(11) **EP 0 362 026 B1**
(45) Date de publication et mention de la délivrance du brevet: **05.01.1994**
(21) Numéro de dépôt: 89402578.2
(22) Date de dépôt: 20.09.1989
(51) Int. Cl.: E05F 11/44, B60J 1/17

(54) **Dispositif d'accouplement fixe entre une vitre et un mécanisme de lève-vitre dans un véhicule**
Vorrichtung zur festen Kupplung zwischen einer Fensterscheibe und einem Fensterhebemechanismus in einem Fahrzeug
Fixed coupling device between a window and a window opening mechanism in a vehicle

(30) Priorité: 29.09.1988 FR 8812761
(43) Date de publication de la demande: 04.04.1990
(73) Titulaire: ROCKWELL BODY AND CHASSIS SYSTEMS - FRANCE, en abrégé: ROCKWELL BCS - FRANCE, 92082 Paris La Défense 2 (FR)
(72) Inventeur: Bertolini, Carlo, 75011 Paris (FR)
(74) Mandataire: Martin, Jean-Paul

(56) Documents cités:
- DE-B- 1 459 010
- US-A- 4 766 697

## Description

La présente invention a pour objet un dispositif d'accouplement entre une vitre et un mécanisme de lève-vitre dans un véhicule automobile.

Un tel dispositif d'accouplement est décrit dans le document DE-B-1 459 010, qui sort de base au préambule de la revendication 1.

Comme on le sait, la pose des vitres sur les mécanismes lève-vitres correspondants dans les portes de véhicules doit être exécutée manuellement sur les chaînes de montage de véhicules. L'opérateur amène à cet effet les roulettes ou galets d'extrtémités des bras du lève-vitre dans des coulisses fixées au bas de la vitre. On connaît aussi par le document US-A-4 766 697 un accouplement comportant une articulation rotulante entre une sphère d'un lève-vitre à ruban et un coulisseau rigide, monobloc, mobile dans un profilé solidaire du bas de vitre. Un ressort porté par une tige support de la sphère maintient cette dernière dans le coulisseau. Les opérations de montage de ces accouplements, qui se font partiellement "en aveugle", sont trop complexes pour pouvoir être exécutées par un robot, dans le cadre de l'automatisation des chaînes de véhicules automobiles.

L'invention a donc pour but de réaliser un dispositif d'accouplement du type défini au préambule de la revendication 1, de telle sorte que l'accouplement puisse être réalisé par un robot portant la vitre, à l'exclusion de toute intervention manuelle.

Suivant l'invention, le dispositif d'accouplement est caractérisé par les moyens mentionnés à la partie caractérisante de la revendciation 1.

Le mouvement de la vitre étant une translation sensiblement verticale, l'agencement selon l'invention permt d'exécuter automatiquement par un robot l'emboîtement des deux profilés par clipsage.

Suivant une autre particularité de l'invention, des logements de forme complémentaire sont agencés en vis-à-vis l'un de l'autre dans les faces en regard des deux parties du profilé et sont adaptés pour recevoir la sphère, et dans le logement de la partie rigide débouche une entaille évasée d'introduction de la sphère, ménagée dans le bord de ladite partie.

D'autres caractéristiques et avantages de l'invention apparaitront au cours de la description qui va suivre, faite en référence aux dessins annexés qui en illustrent une forme de réalisation à titre d'exemple non limitatif.

La figure 1 est une vue en perspective simplifiée d'un mécanisme lève-vitre et de la vitre correspondante d'une porte non représentée de véhicule automobile.

La figure 2 est une vue en perspective partielle éclatée de l'un des deux dispositifs d'accouplement selon l'invention, visibles schématiquement à la Fig.1.

Les figures 3, 4 et 5 sont des vues en coupe transversale des deux profilés du dispositif de la Fig.2, illustrant une séquence d'accouplement.

La figure 6 est une vue en perspective éclatée d'une seconde forme de réalisation du dispositif d'accouplement selon l'invention, équipant l'un des bras du lève-vitre visible à la Fig.1.

La figure 7 est une vue en perspective du dispositif suivant la flèche K de la Fig.6, c'est-à-dire du côté de la face arrière du profilé recevant la vitre.

Les figures 8, 9 et 10 sont des vues en coupe transversale suivant 8-8 de la Fig.7, illustrant une séquence d'accouplement.

La figure 11 est une vue en perspective avec arrachement d'une variante de réalisation du dispositif des Fig.6 et 7.

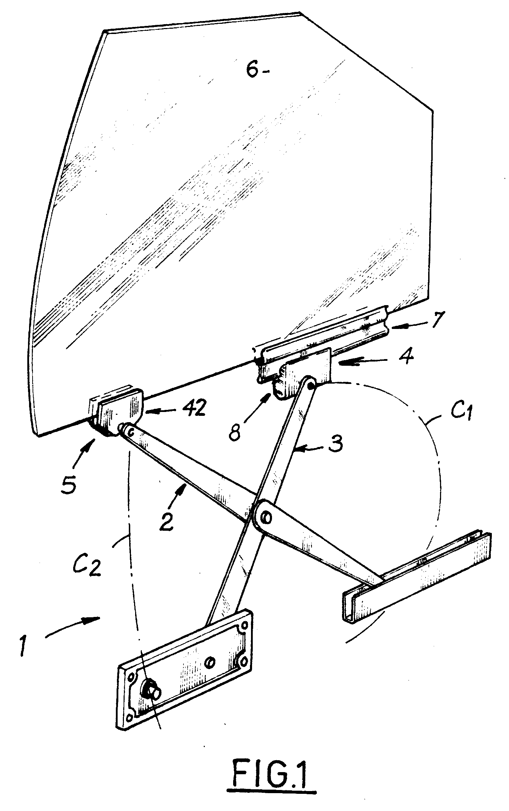

Le dispositif représenté à la Fig.1 comprend un mécanisme de lève-vitre 1 réalisé de façon connue en soi pour pouvoir être logé dans une porte non représentée de véhicule. Il comprend notamment deux bras 2,3 de support d'une vitre 6 par l'intermédiaire de deux dispositifs d'accouplement respectifs 5 et 4.

Les articulations des bras 2 et 3 sont conçues de telle sorte que durant les montées et descentes de la vitre 4, l'extrémité supérieure du bras 3 décrit une courbe semi-circulaire C1 tandis que l'extrémité supérieure du bras 2 décrit un parcours C2 presque rectiligne. En effet, le dispositif d'accouplement 4 est agencé pour permettre un déplacement coulissant de l'un de ses éléments constitutifs par rapport à la vitre 6, ce qui n'est pas le cas du dispositif d'accouplement 5.

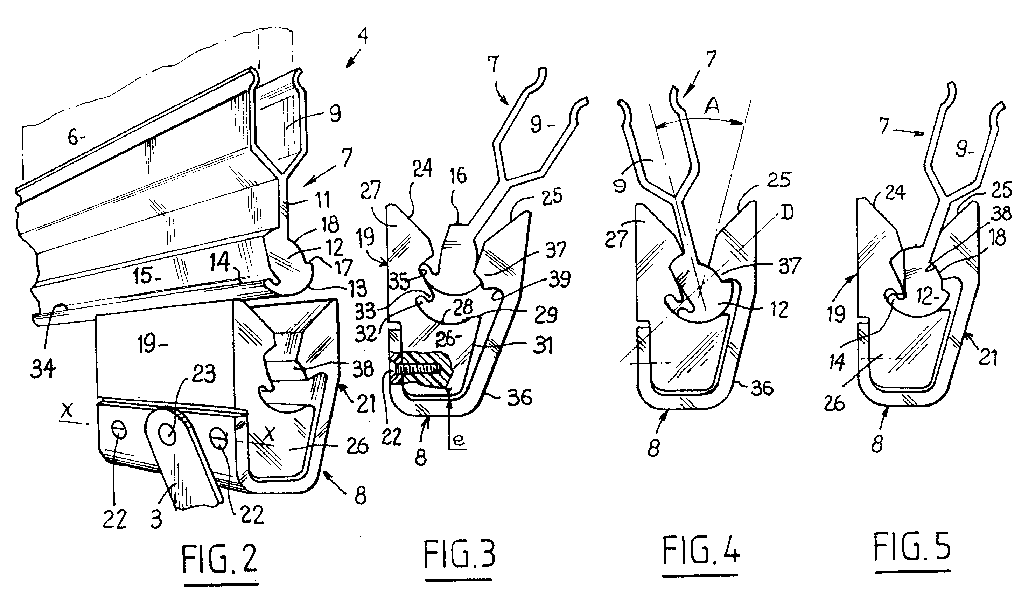

Le dispositif d'accouplement 4 comporte (Fig.2 à 5) en combinaison deux profilés conjugués 7 et 8 : le premier profilé 7 est adapté pour pouvoir être fixé au bas de la vitre 6 et présente à cet effet une gorge longitudinale 9 en U dirigée vers le haut, le second profilé 8 étant agencé pour être articulé sur le bras 3.

Les sections des profilés 7 et 8 sont telles que le premier profilé 7 peut être emboîté par clipsage et par un déplacement situé sensiblement dans le plan général de la vitre 6 et du mouvement de celle-ci, les sections conjuguées des deux profilés 7,8 définissant un degré de rotation et un degré de translation du profilé 8 par rapport au profilé 7.

Le fond de la gorge 9 se prolonge par un voile central 11 qui lui-même est prolongé par une partie terminale 12 plus massive. La surface inférieure 13 de cette partie 12 est arrondie (convexe) et limitée d'un côté par une lèvre incurvée 14 saillant latéralement en section et qui s'étend longitudinalement sur toute la longueur du profilé 7. Au-delà de la lèvre 14 s'étend une surface plane 15 reliée à la base du voile 11 par un ressaut incliné 16 et séparée de la lèvre 14 par une gorge longitudinale 34. Du côté opposé à la lèvre saillante 14, la surface convexe 13 est limitée par un décrochement radial 17 prolongé par une surface convexe 18.

Le second profilé 8 est ouvert en entonnoir et constitué de deux branches fixées l'une à l'autre : une branche non flexible, rigide 19 sur laquelle est articulée une branche flexible 21 fixée à la branche 19, par exemple par des vis 22. L'alignement des têtes de vis 22 définit l'axe longitudinal X-X d'articulation de la branche 21, laquelle enveloppe la base de la branche 19 sensiblement jusqu'au-delà des vis de fixation 22 et de l'axe 23 d'articulation du profilé 8 sur le bras 3. Les bords supérieurs en vis-à-vis 24 et 25 des branches 19 et 21 sont inclinés l'un vers l'autre de façon à délimiter entre eux une ouverture en entonnoir (vue en section). Cet entonnoir permet l'introduction de la partie terminale 12 du profilé 7 entre les deux branches 19 et 21 par clipsage grâce à l'écartement de la branche 21.

La branche rigide 19 comporte une partie massive 26 recevant les vis 22 et qui s'étend dans la partie inférieure de la branche 21 avec entre elles un intervalle approprié e. Cette partie massive 26 est prolongée par une partie supérieure plus mince 27 terminée par le bord incliné 24. La partie massive 26 présente une surface intérieure concave 28 d'appui pour le profilé 7, et à cet effet le rayon de courbure de la surface concave 28 correspond à celui de la surface convexe 13.

La surface 28 est limitée d'un coté par une arête 29 qui forme l'intersection du côté 31 avec la surface 28, tandis que du côté opposé la surface 28 se raccorde au fond d'un dégagement 32 de forme complémentaire de celle de la lèvre 14 afin de pouvoir recevoir cette dernière lorsque les deux profilés 7,8 sont complètement emboîtés (Fig.5). Le dégagement 32 est délimité, au-dessus de la surface 28, par une lèvre saillante 33 dimensionnée pour pouvoir venir s'introduire dans la gorge correspondante 34. Enfin, la lèvre 33 est reliée au bord incliné 24 par un évidement 35.

La branche flexible 21 comporte, entre son bord supérieur 25 et sa partie 36 enveloppant la partie massive 26, un épaulement 37 sur la surface intérieure duquel est ménagée une surface concave 38 conjuguée de la surface convexe 18, les rayons de courbure de ces deux surfaces étant donc pratiquement égaux. La surface concave 38 est reliée à la partie plus mince 36 par un décrochement 39 sur lequel peut venir prendre appui le décrochement radial 17 lorsque le profilé 7 et la vitre 6 ont une inclinaison appropriée (Fig.4).

La surface concave 28 est positionnée de manière qu'une droite diamétrale D passant par son centre (Fig.4) passe également par un point voisin de l'axe d'articulation X-X de la branche 19.

L'accouplement du profilé 7 préalablement fixé à la vitre 6, et du profilé 8 porté par le bras 3, est exécuté de la manière suivante, par un robot non représenté, portant la vitre 6 par exemple par des ventouses électropneumatiques.

La vitre 6 et le profilé 7 exécutent une descente au-dessus du profilé 8 avec une inclinaison appropriée sur la verticale (Fig.3). Le profilé 7 est ainsi incliné vers la branche flexible 21, sa partie massive 12 pénètre entre les bords 24,25 de l'entonnoir et écarte la branche 21. La lèvre 14 vient s'appliquer sur la partie inférieure de l'évidement 35, tandis que le décrochement 17 vient au contact de la surface concave 38.

Le robot commande la poursuite de la descente de la vitre 6 et du profilé 7 jusqu'au fond du profilé 8.

La branche 21 continue à s'écarter de la partie massive 26 jusqu'à ce que la lèvre 14 glisse sur la lèvre 33 et parvienne au contact avec la surface concave 28, sur laquelle prend donc également appui la surface convexe 13 (Fig.4). En même temps, le décrochement 17 a franchi l'arête de séparation entre la surface concave 38 et le dégagement 39 sur lequel il vient prendre appui. Au terme de cette manoeuvre, le profilé 7 est clipsé dans le profilé 8 dont la branche 21 s'est rabattue sur la partie massive 12. Celle-ci est alors retenue emprisonnée entre les branches 19 et 21 par la force élastique appliquée sur la surface convexe 18 par la surface concave conjuguée 38, et par l'appui de la surface convexe 16 sur la partie supérieure complémentaire de l'évidement 35.

A ce sujet il est important de noter que le positionnement de la droite D par rapport à l'axe X-X tel qu'expliqué ci-dessus, s'oppose au déclipsage de la branche 21 et garantit donc le maintien du profilé 7 dans le profilé 8. bien entendu, si toutefois une traction suffisamment élevée est exercée sur le profilé 7 pour le déclipser du profilé 8, la branche 21 s'écartera et libèrera le profilé 7. En pratique, à titre indicatif, les sections des profilés 7 et 8 peuvent être déterminées de telle façon que le profilé 7 peut s'emboîter dans le profilé 8 sous un effort de 5 kg, alors qu'il faut une force de 30 kg pour l'en arracher.

Dans leur position normale finale, le profilé 7 et la vitre 6 sont dans une position telle que la lèvre 14 vient se loger dans l'évidement 32 et que la surface convexe 18 vient en appui sur la surface concave 38.

Il existe après clipsage, un degré de liberté en rotation d'angle A entre les profilés 7 et 8, et un degré de liberté en translation du profilé 8 par rapport au profilé 7. L'angle A (Fig.4) permet aux profilés 7 et 8 de pivoter l'un sur l'autre lors de la course de fonctionnement de la vitre 6.

Le profilé 7 est beaucoup plus long que le profilé 8, afin que ce dernier puisse coulisser sur le profilé 7 pendant les manoeuvres du lève-vitre.

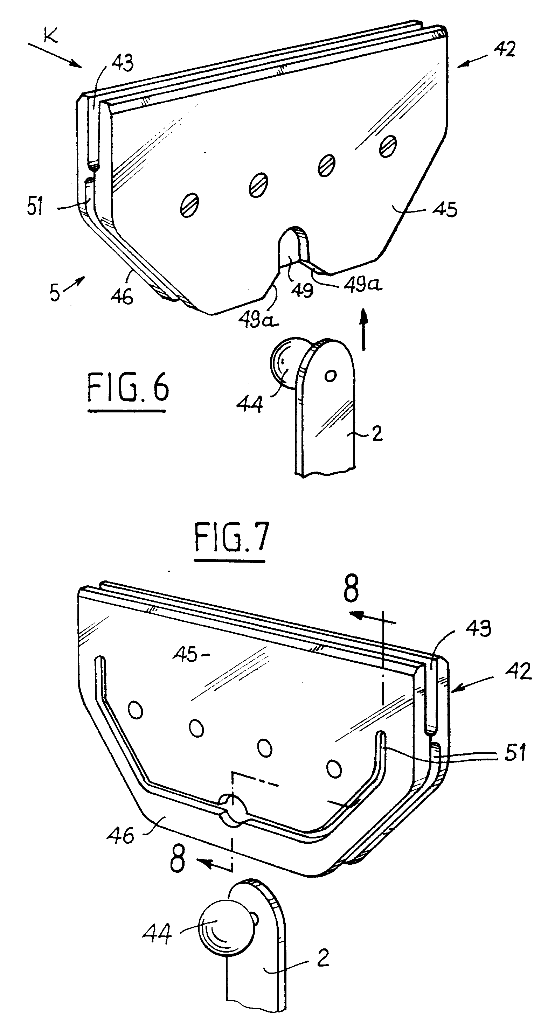

On décrira maintenant le second dispositif d'accouplement 5 en référence aux Fig.6 à 10.

Ce dispositif comprend un profilé unique 42 présentant une gorge 43 adaptée pour recevoir le bas de la vitre 6, et des moyens pour assurer par clipsage d'une partie de ce profilé une articulation rotulante sur une sphère 44 formant rotule, fixée à l'extrémité du bras 2.

Le profilé 42 étant fixé à la vitre 6, son accouplement avec la sphère 44 est exécuté par un déplacement de la vitre 6 sensiblement dans son plan et dans celui de son mouvement, qui confère à la sphère 44 trois degrés de liberté en rotation par rapport au profilé 42.

Ce dernier comprend une partie rigide 45 et une partie souple 46 articulée élastiquement sur la partie rigide 45 sur laquelle elle est normalement maintenue en appui, en formant avec celle-ci une pince pouvant emprisonner la sphère 44 par clipsage de la partie élastique 46 sur la partie rigide 45.

Des logements 47 et 48 de forme sphérique complémentaire sont agencés en vis-à-vis l'un de l'autre dans les faces en regard des deux parties 45 et 46 et sont adaptés pour recevoir la sphère 44. Dans le logement 47 de la partie rigide 45 débouche une entaille 49 évasée, ménagée dans le bord inférieur de la partie 45, et dont les bords 49a sont chanfreinés pour faciliter l'introduction de la sphère 44 dans le logement 47.

La partie articulée 46 est une bande latérale s'étendant le long du bas du profilé 42 ainsi que sur ses côtés, sensiblement jusqu'à la base de la gorge 43. Cette bande 46 est délimitée par un évidement 51 ménagé dans le profilé 42 et qui débouche dans la face de celui-ci opposée à sa partie rigide 45. Le contour de l'évidement 51, qui forme sur cette face une rainure de forme approximativement en C dans l'exemple représenté, est tel que la bande 46 a une forme d'anse, pouvant s'écarter élastiquement de la partie rigide 45 sur une poussée de la sphère 44.

Le bord 52 de la bande élastique 46 est chanfreiné en regard de l'entaille 49, afin de faciliter l'écartement de la bande 46 et l'introduction de la sphère 44 jusque dans son logement.

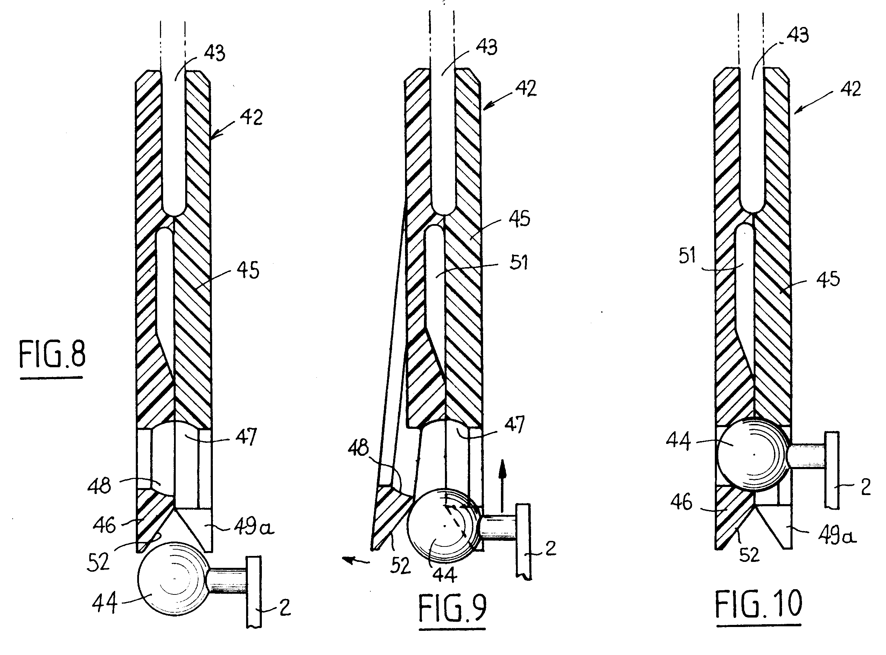

L'accouplement du profilé 42 fixé à la vitre 6 et de la sphère 44 portée par le bras 2 est illustré aux Fig.8 à 10. Sur la Fig.8 le profilé 42 se présente avec son entaille 49 au-dessus de la sphère 44. Le robot abaisse alors la vitre et le profilé 42, de telle sorte que la sphère 44 glisse sur les bords chanfreinés 49a et 52 en écartant élastiquement la bande périphérique 46 (Fig.9).

Le robot poursuit la descente du profilé 42 jusqu'à ce que (Fig.10) la sphère 44 vienne s'emboîter complètement dans son logement 47,48, après clipsage de la bande 46. (Sur les Fig.8 à 10 on a représenté par commodité le profilé 42 fixe et la sphère 44 mobile, alors qu'en réalité c'est l'inverse.)

Cette opération d'accouplement est donc particulièrement simple puisqu'elle peut être exécutée par une seule translation verticale commandée par le robot. Après clipsage, la sphère 44 et le bras disposent de trois degrés de liberté en rotation par rapport au profilé 42.

L'accouplement entre la vitre 6 et le lève-vitre 2 peut être réalisé, soit comme dans l'exemple illustré à la Fig.1 par un dispositif 5 équipé d'un profilé 42 fixe par rapport à la vitre 6 et un dispositif 4 muni d'un profilé 8 coulissant par rapport à la vitre ; soit par un seul dispositif 5 permettant de lier une vitre 6 à un lève-vitre du type "à rail".

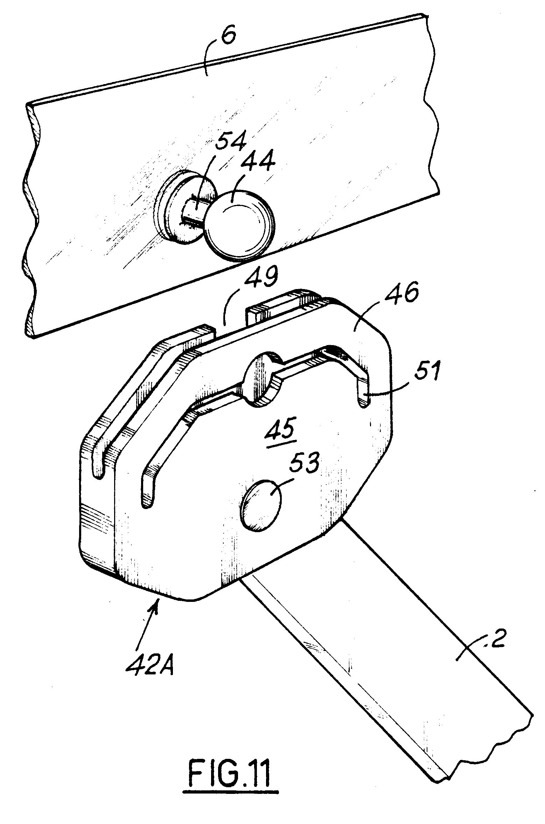

Parmi les variantes d'exécution possibles, figure l'inversion de la pince du profilé 42 et de la sphère 44. La sphère 44 peut en effet être portée par la vitre 6 tandis que la pince (45,46) peut être portée par le bras 2, comme représenté à la Fig.11. Le profilé 42A formant cette pince (45,46) est alors dépourvu de la gorge 43 et articulé sur l'extrémité du bras 2 par un axe 53, tandis que la sphère 44 est supportée par un pied 54 noyé dans la vitre 6.

## Revendications

1. Dispositif (5) d'accouplement entre une vitre (6) et un bras d'un mécanisme (2) de lève-vitre dans un véhicule automobile, comprenant un profilé (42) pourvu de moyens pour assurer une articulation rotulante dudit profilé sur une sphère (44) portée par le bras (2) ou par la vitre (6), tandis qu'inversement ledit profilé (42 ou 42A) est fixé à la vitre ou articulé sur le bras, caractérisé en ce que le profilé (42) comporte une partie rigide (45) et une partie souple (46) articulée élastiquement sur la partie rigide de manière à être normalement rappelée et maintenue en appui contre ladite partie rigide en formant avec celle-ci une pince pouvant emprisonner la sphère (44) par clipsage de la partie élastique (46) sur la partie rigide (45), l'accouplement par clipsage étant exécuté par un déplacement de la vitre sensiblement dans son plan et dans celui de son mouvement, conférant à la sphère après clipsage trois degrés de liberté en rotation par rapport au profilé (42, 42A).

2. Dispositif selon la revendication 1, caractérisé en ce que les logements (47, 48) de forme complémentaire sont agencés en vis-à-vis l'un de l'autre dans les faces en regard des deux parties (45, 46) du profilé et sont adaptés pour recevoir la sphère (44), et dans le logement (47) de la partie rigide (45) débouche une entaille évasée (49) d'introduction de la sphère, ménagée dans le bord de ladite partie (45).

3. Dispositif selon les revendications 1 et 2, caractérisé en ce que la partie articulée (46) est une bande latérale délimitée par un évidement (51) ménagé dans le profilé, débouchant dans la face du profilé (42) opposée à sa partie rigide (45) et dont le contour est tel que la bande (46) a une forme d'anse pouvant s'écarter élastiquement de la partie rigide (15) sous une poussée de la sphère (44) puis se clipser sur cette dernière.

4. Dispositif selon la revendication 3, caractérisé en ce que le bord (52) de la partie élastique (46) est chanfreiné en regard de l'entaille (49) de la partie rigide (45), de même que les bords (49a) de ladite entaille, afin de faciliter l'écartement de la partie élastique (46) et l'introduction de la sphère (44) jusque dans son logement (47, 48).

5. Dispositif selon l'une des revendications 1 à 4, caractérisé en ce que le profilé (42) comporte une gorge (43) adaptée pour recevoir le bas de la vitre (6), la sphère (44) étant fixée au bras (2).

## Claims

1. A coupling device (5) between a window (6) and an arm of a window-raiser mechanism (2) in a motor vehicle, comprising a section (42) equipped with means for ensuring a swivelling articulation of the said section on a sphere (44) carried by the arm (2) or by the window (6), whilst, conversely, the said section (42 or 42A) is fastened to the window or articulated on the arm, **characterised in that** the section (42) comprises a rigid part (45) and a flexible part (46) articulated resiliently on the rigid part, so as normally to be returned and to continue bearing against the said rigid part, forming with the latter a squeezing device capable of retaining the sphere (44) by snapping the resilient part (46) onto the rigid part (45), the snap coupling being carried out by displacing the window substantially within its plane and within that of its movement, thus giving the sphere, after snapping, three degrees of freedom in terms of rotation relative to the section (42, 42A).

2. A device according to claim 1, **characterised in that** the [*sic*] recesses (47, 48) of complementary shape are arranged opposite one another in the mutually opposed surfaces of the two parts (45, 46) of the section and are designed to receive the sphere (44), and a widened notch (49), intended for the introduction of the sphere and formed in the edge of the said part (45), opens into the recess (47) in the rigid part (45).

3. A device according to claims 1 and 2, **characterised in that** the articulated part (46) is a lateral strip delimited by a channel (51) which is formed in the section and opens in the surface of the section (42) opposite its rigid part (45), the outline of the said channel being such that the strip (46) is in the shape of a handle capable of moving away resiliently from the rigid part (15) [*sic*] under a force exerted by the sphere (44), and then of snapping on to the latter.

4. A device according to claim 3, **characterised in that** the edge (52) of the resilient part (46) is chamfered opposite the notch (49) in the rigid part (45), as are the edges (49a) of the said notch, in order to facilitate moving away of the resilient part (46) and introduction of the sphere (44) into its housing (47, 48).

5. A device according to one of claims 1 to 4, **characterised in that** the section (42) includes a groove (43) designed to receive the bottom of the window (6), the sphere (44) being fastened to the arm (2).

## Patentansprüche

1. Kupplungsvorrichtung (5) zwischen einer Fensterscheibe (6) und einem Arm (2) eines Fensterhebemechanismus in einem Kraftfahrzeug, die ein Profil (42) umfaßt, das mit Mitteln zur Herstellung einer Kugelgelenklagerung dieses Profils auf einer von dem Arm (2) oder von der Fensterscheibe (6) getragenen Kugel (44) versehen ist, während umgekehrt das Profil (42 oder 42A) an der Fensterscheibe befestigt ist oder an dem Arm angelenkt ist, dadurch gekennzeichnet, daß das Profil (42) einen starren Teil (45) und einen biegsamen Teil (46) umfaßt, der am starren Teil elastisch angelenkt ist, so daß er normalerweise in Anlage an dem starren Teil zurückgeholt und gehalten ist, indem er mit diesem eine Klammer bildet, die die Kugel (44) durch Einschnappen des elastischen Teils (46) auf dem starren Teil (45) einschließen kann, wobei die Kupplung durch Einschnappen durch eine Verschiebung der Fensterscheibe im wesentlichen in ihrer Ebene und in der ihrer Bewegung hergestellt wird, was der Kugel nach Einschnappen drei Freiheitsgrade in der Drehung bezüglich des Profils (42, 42A) verleiht.

2. Vorrichtung nach Anspruch 1, dadurch gekennzeichnet, daß die Aussparungen (47, 48) ergänzender Form einander gegenüber in den einander gegenüberstehenden Seiten der beiden Teile (45, 46) des Profils vorgesehen sind und die Kugel (44) aufnehmen können, und daß in die Aussparung (47) des starren Teils (45) ein ausgeweiteter Einschnitt (49) zur Einführung der Kugel mündet, der im Rand dieses Teils (45) vorgesehen ist.

3. Vorrichtung nach den Ansprüchen 1 und 2, dadurch gekennzeichnet, daß der angelenkte Teil (46) ein seitliches Band ist, das durch eine im Profil vorgesehene Ausnehmung (51) abgegrenzt ist, die in der dem starren Teil (45) entgegengesetzten Seite des Profils (42) ausmündet und deren Umriß so beschaffen ist, daß das Band (46) die Form eines Bügels hat, der unter dem Druck der Kugel (44) elastisch vom starren Teil (15) entfernt werden und dann auf dieser einschnappen kann.

4. Vorrichtung nach Anspruch 3, dadurch gekennzeichnet, daß der Rand (52) des elastischen Teils (46) gegenüber dem Einschnitt (49) des starren Teils (45) ebenso wie die Ränder (49a) dieses Einschnitts abgeschrägt ist, um die Entfernung des elastischen Teils (46) und die Einführung der Kugel (44) in die sie aufnehmende Aussparung (47, 48) zu erleichtern.

5. Vorrichtung nach einem der Anlsprüche 1 bis 4, dadurch gekennzeichnet, daß das Profil (42) eine Nut (43) besitzt, die das untere Ende der Fensterscheibe (6) aufnehmen kann, wobei die Kugel (44) am Arm (2) befestigt ist.
